(19) Europäisches Patentamt
European Patent Office
Office européen des brevets

(11) **EP 3 963 654 B1**

(12) **EUROPÄISCHE PATENTSCHRIFT**

(45) Veröffentlichungstag und Bekanntmachung des Hinweises auf die Patenterteilung:
**31.05.2023 Patentblatt 2023/22**

(21) Anmeldenummer: **20721474.3**

(22) Anmeldetag: **17.04.2020**

(51) Internationale Patentklassifikation (IPC):
**H01M 8/0444** (2016.01) **H01M 8/1018** (2016.01)
**H01M 8/04955** (2016.01) **H01M 8/04492** (2016.01)
**H01M 8/10** (2016.01)

(52) Gemeinsame Patentklassifikation (CPC):
**H01M 8/04447; H01M 8/04529;** H01M 8/04955;
H01M 2008/1095; Y02E 60/50

(86) Internationale Anmeldenummer:
**PCT/EP2020/060844**

(87) Internationale Veröffentlichungsnummer:
**WO 2020/239323 (03.12.2020 Gazette 2020/49)**

(54) **VERFAHREN UND SYSTEM ZUR UNTERSUCHUNG EINER BRENNSTOFFZELLE MITTELS EINER ZYKLOVOLTAMMETRISCHEN MESSUNG**

METHOD AND SYSTEM FOR TESTING A FUEL CELL BY MEANS OF A CYCLOVOLTAMETRIC MEASUREMENT

PROCÉDÉ ET SYSTÈME D'ANALYSE D'UNE PILE À COMBUSTIBLE AU MOYEN D'UNE MESURE CYCLOVOLTAMMÉTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2019 EP 19177645**

(43) Veröffentlichungstag der Anmeldung:
**09.03.2022 Patentblatt 2022/10**

(73) Patentinhaber: **Siemens Energy Global GmbH & Co. KG**
**81739 München (DE)**

(72) Erfinder:
• **BRAUNECKER, Michael**
**90419 Nürnberg (DE)**
• **REINER, Andreas**
**91083 Baiersdorf (DE)**

(56) Entgegenhaltungen:
EP-A1- 3 151 321      DE-A1-102007 002 426
US-A1- 2019 157 693

**Beschreibung**

Die Erfindung betrifft ein Verfahren und ein System zur Untersuchung einer Brennstoffzelle mittels einer zyklovoltammetrischen Messung gemäß Patentanspruch 1 bzw. 11.

In einer Brennstoffzelle wird durch die elektrochemische Verbindung von Wasserstoff ($H_2$) und Sauerstoff ($O_2$) an einer Elektrode zu Wasser ($H_2O$) elektrischer Strom mit hohem Wirkungsgrad erzeugt. Die Brennstoffzellen werden während ihres Betriebs mit Betriebsgasen - also einem wasserstoffhaltigen Brenngas und einem sauerstoffhaltigen Oxidationsgas - versorgt. Der Wasserstoff und der Sauerstoff werden auch als "Reaktanten" bezeichnet.

Eine Brennstoffzelle umfasst dabei üblicherweise einen ionendurchlässigen Elektrolyten und zu beiden Seiten jeweils eine Katalysatorschicht und eine Elektrode. In Fall von Polymer-Elektrolyt-Membran-Brennstoffzellen (PEM-Brennstoffzellen) ist der Elektrolyt eine protonenleitende Membran. Diese Membran bildet zusammen mit der Katalysatorschicht und den Elektroden eine Membran-Elektrodeneinheit. Daran schließt sich zu beiden Seiten jeweils ein Gasraum für das Brenngas bzw. das Oxidationsgas an. Die Elektrode an dem von Brenngas durchströmten Gasraum wird üblicherweise als "Anode" und der Gasraum als "anodenseitiger Gasraum" bezeichnet. Die Elektrode an dem von Oxidationsgas durchströmten Gasraum wird üblicherweise als Kathode und der Gasraum als "kathodenseitiger Gasraum" bezeichnet.

Es sind bereits verschiedenste Verfahren zur Untersuchung von Brennstoffzellen bei deren regulärem, laufendem Betrieb bekannt (d.h. bei einem Betrieb, in dem den Gasräumen Betriebsgas zugeführt wird und die Gasräume von dem Betriebsgas durchströmt werden), bei denen Impedanzen der Brennstoffzellen gemessen werden, um beispielsweise einen Versorgungszustand des Brenngases und einen Feuchtigkeitszustand des Elektrolyten zu ermitteln (siehe z.B. EP 1 898 483 A1).

Weiterhin ist es bekannt, Brennstoffzellen mittels einer zyklovoltammetrischen Messung zu untersuchen. Unter einer zyklovoltammetrischen Messung wird im Folgenden eine Messung verstanden, bei der einer Elektrode einer Brennstoffzelle zyklisch ein definierter Spannungs- bzw. Potentialverlauf (z.B. ein im wesentlichen dreieckförmiger Spannungs- bzw. Potentialverlauf mit einer vorzugsweise konstanten Vorschubgeschwindigkeit bzw. Potentialanstiegsrate) aufgeprägt wird und ein resultierender Stromverlauf gemessen wird. Zyklovoltammetrische Messungen werden manchmal auch als Zyklovoltammetrie, zyklische Voltamperometrie, Cyclovoltammetrie oder Dreieckspannungsmethode bezeichnet.

Aus der DE 10 2007 002 426 A1 ist eine Diagnosevorrichtung bekannt, bei der Brennstoffzellen bei einem Systemstillstand mittels Zyklovoltammetrie getestet werden, um deren Alterungszustand zu bestimmen. Bei der bekannten Diagnosevorrichtung werden für eine Vermessung der Kathode der Kathodengasraum mit Stickstoff und der Anodengasraum mit Wasserstoff durchströmt. Zur Vermessung der Anode werden die Gase vertauscht.

Brennstoffzellen können neben einem regulären Betriebszustand, in dem ihre Gasräume mit Brenngas und Oxidationsgas durchströmt werden, aber auch einen Betriebszustand aufweisen, in dem den Gasräumen kein Gas zugeführt wird und sie deshalb auch nicht von diesen Gasen durchströmt werden.

Beispielsweise ist dies ein Lagerungszustand oder ein (zeitweise) stillgesetzter bzw. abgeschalteter Zustand. In diesem Zustand besteht keine Zufuhr an Brenngas und Oxidationsgas und es wird auch kein Strom abgeleitet. Die Gasräume sind eingangsseitig von einer Gaszufuhr bzw. Gasversorgungseinrichtung getrennt (z.B. mittels eines abgesperrten Ventils) oder überhaupt nicht daran angeschlossen.

Um Korrosionen und Oxidationen in der Brennstoffzelle und deren Bauelementen zu verhindern, sind die Gasräume häufig derart mit Wasserstoff befüllt, dass einem durch Leckagen und Undichtigkeiten eindringendem Sauerstoff stets ein stöchiometrischer Überschuss an Wasserstoff gegenübersteht. Dieser sogenannte "Wasserstoff-Überschuss" wird beispielsweise beim Hersteller der Brennstoffzellen bei einem Abschalten der Brennstoffzellen in einem Testbetrieb erzeugt (siehe z.B. EP 0 914 685 B1).

Üblicherweise sind die elektrischen Lastanschlüsse derartiger Brennstoffzellen auch kurzgeschlossen, um eine Potenzialdifferenz zwischen der Kathode und der Anode der Brennstoffzelle zu verhindern.

Beispielsweise kommen Brennstoffzellen nach deren Herstellung und einem nachfolgenden Test häufig noch nicht gleich zum Einsatz, sondern müssen beim Hersteller und/oder bei einem Abnehmer der Brennstoffzellen zwischengelagert werden. Insbesondere gilt dies für Ersatz- oder Austauschbrennstoffzellen, die vorgehalten werden, um im Fall eines Ausfalls von Brennstoffzellen und eines notwendigen Austausches eine hohe Verfügbarkeit einer Brennstoffzellenanlage sicherzustellen. Entsprechend sind diese Brennstoffzellen auch nicht an Versorgungseinrichtungen für die Reaktanden angeschlossen.

Bei der Lagerung der Brennstoffzellen ist sicherzustellen, dass in den Gasräumen stets ein Wasserstoffüberschuss vorliegt. Außerdem ist sicherzustellen, dass der Elektrolyt (im Fall von PEM-Brennstoffzellen die Elektrolyt-Membran) nicht austrocknet.

Aus der EP 3 151 321 A1 ist es bekannt, einen Lagerungszustand einer Brennstoffzelle, deren Gasräume während der Lagerung mit Wasserstoff beaufschlagt sind, zu überwachen, indem Impedanzen der Brennstoffzelle bei zumindest einer ersten und einer zweiten Frequenz ermittelt werden, wobei die erste Frequenz größer als die zweite Frequenz ist, und wobei aus der ermittelten Impedanz bei der ersten Frequenz ein Feuchtegehalt des Elektrolyten überwacht und mit den bei beiden Frequenzen ermittelten Impedanzen eine Wasserstoffkonzentration in den Gasräumen überwacht wird. US 2019/157693 A1 gibt eine Diagnosevorrichtung und ein Diagnoseverfahren für Brennstoffzellen an, bei der die Brennstoffzellen mittels Zyklovoltammetrie getestet werden und dabei die Kontamination des Kathodengases, z.B. durch $SO_2$, mittels Zyklovoltammetrie bestimmt wird.

Ausgehend hiervon ist es Aufgabe vorliegender Erfindung, zyklovoltammetrische Messungen noch mehr als bisher nutzbringend zur Untersuchung von Brennstoffzellen einzusetzen, insbesondere zur Untersuchung bzw. Überwachung eines Lagerungszustandes einer Brennstoffzelle.

Die Lösung dieser Aufgabe gelingt durch ein Verfahren gemäß Patentanspruch 1 und ein System gemäß Patentanspruch 8. Erfindungsgemäße Verwendungen des Verfahrens sind Gegenstand der Patentansprüche 6 und 7. Eine erfindungsgemäße Brennstoffzellenvorrichtung ist Gegenstand des Patentanspruchs 11. Vorteilhafte Ausgestaltungen sind jeweils Gegenstand der Unteransprüche.

Der Erfindung liegt dabei die überraschende Erkenntnis zugrunde, dass es mittels einer zyklovoltammetrischen Messung auch möglich ist, eine Gaszusammensetzung, insbesondere einen Wasserstoffüberschuss, in der Brennstoffzelle bzw. in deren Gasräumen (d.h. sowohl in deren anodenseitigem als auch in deren kathodenseitigem Gasraum) zu ermitteln und somit zwischen unterschiedlichen Gaszusammensetzungen zu unterscheiden. Wie von den Erfindern erkannt und experimentell nachgewiesen wurde, ist es zum Beispiel möglich, zwischen einer Gasatmosphäre mit Wasserstoffüberschuss und einer Gasatmosphäre mit Sauerstoffüberschuss zu unterscheiden. Die Erfindung lässt sich somit besonders vorteilhaft zur Überwachung eines Zustandes einer lagernden oder nicht-betriebenen Brennstoffzelle nutzen, insbesondere auch aus der Ferne, z.B. mittels eines entfernten Rechnernetzwerkes (Cloud). Sie kann aber auch sehr vorteilhaft zur Überwachung und/oder Steuerung eines Abschaltvorganges einer Brennstoffzelle genutzt werden, insbesondere um dabei eine gewünschte Gasatmosphäre in der Brennstoffzelle einzustellen, wie z.B. einen Wasserstoffüberschuss. Dies ist ohne Eingriffe in die Brennstoffzelle mit nur einem einzigen Messgerät möglich. Es ist lediglich ein Zugang zu Lastanschlüssen der Brennstoffzelle notwendig.

Bei dem erfindungsgemäßen Verfahren wird deshalb mittels einer zyklovoltammetrischen Messung eine Wasserstoffkonzentration, insbesondere ein Wasserstoffüberschuss, in der Brennstoffzelle ermittelt.

Die Brennstoffzelle weist einen ersten Gasraum für einen ersten Reaktanten und einen zweiten Gasraum für einen zweiten Reaktenten auf, wobei während der zyklovoltammetrischen Messung zumindest einem der beiden Gasräume, insbesondere beiden Gasräumen, kein Reaktant zugeführt wird. Beispielsweise werden bei einer gelagerten oder nicht betriebenen Brennstoffzelle beiden Gasräumen kein Reaktant zugeführt. Im Fall eines Abschaltens der Brennstoffzelle ist es auch möglich, dass für einen Zeitraum nur einem der beiden Gasräume kein Reaktant zugeführt wird. Der Gasraum bzw. die Gasräume ohne Reaktantenzufuhr ist bzw. sind dann beispielsweise von einer daran angeschlossen Gaszufuhr bzw. Gasversorgungseinrichtung getrennt (z.B. mittels eines abgesperrten Ventils) oder überhaupt nicht daran angeschlossen.

Wie festgestellt wurde, kann anhand der zyklovoltammetrischen Messung eine Wasserstoffkonzentration in den Gasräumen ermittelt werden und somit zwischen unterschiedlichen Wasserstoffkonzentrationen in den Gasräumen unterschieden werden.

Gemäß einer weiteren vorteilhaften Ausgestaltung wird eine Information, insbesondere ein optisches Signal, erzeugt, wenn für zumindest einen Messwert der zyklovoltammetrischen Messung, und/oder zumindest einen daraus abgeleiteten Wert, ein Kriterium (z.B. Erreichen, Überschreiten, Unterschreiten) in Bezug auf einen Schwellwert erfüllt ist. Insbesondere kann es sich hierbei um einen Schwellwert handeln, der eine minimal zulässige Wasserstoffkonzentration in den Gasräumen repräsentiert.

Besonders einfach lassen sich hierbei der innerhalb eines Zyklus der zyklovoltammetrischen Messung gemessene maximale und minimale Stromwert und/oder ein daraus abgeleiteter absoluter Abstand zwischen diesen beiden Stromwerten überwachen. Wie festgestellt wurde, kann aus diesem Abstand eine Wasserstoffmenge oder eine Wasserstoffkonzentration ermittelt werden. Für eine Überwachung der Wasserstoffkonzentration ist deshalb besonders einfach ein Schwellwert für einen minimal zulässigen absoluten Abstand zwischen diesen beiden Stromwerten definiert.

Wie sich herausgestellt hat, ist eine besonders hohe Messgenauigkeit dann erzielbar, wenn eine Vorschubgeschwindigkeit (auch als Potentialanstiegsrate bezeichnet) für die zyklovoltammetrische Messung weniger als 0,7 mV/s beträgt. Ein Optimum zwischen Messgenauigkeit und Dauer der Messung ist erzielbar, wenn die Vorschubgeschwindigkeit zwischen 0,15 mV/s und 0,5 mV/s, insbesondere 0,33 mV/s, beträgt. Werden mehrere Brennstoffzellen eines Brennstoffzellenstapels untersucht, ist die Vorschubgeschwindigkeit für die zyklovoltammetrische Messung vorzugsweise linear proportional zur Zahl der Brennstoffzellen. Vorzugsweise beträgt die Vorschubgeschwindigkeit dann weniger als 0,7*Z mV/s, wobei Z die Anzahl der Brennstoffzellen ist. Ein Optimum zwischen Messgenauigkeit und Dauer der Messung ist dann erzielbar, wenn die Vorschubgeschwindigkeit zwischen 0,15*Z mV/s und 0,5*Z mV/s, insbesondere 0,33*Z mV/s, beträgt.

Weiterhin wurde festgestellt, dass für eine hohe Messgenauigkeit der zyklovoltammetrischen Messung von Vorteil die Feuchtigkeit des Elektrolyten bei der Auswahl von Parametern der zyklovoltammetrischen Messung berücksichtigt wird. Dabei liegt die Erkenntnis zugrunde, dass die Impedanz einer Brennstoffzelle mit sinkender Feuchtigkeit des Elektrolyten steigt. Um dies auszugleichen, wird gemäß einer vorteilhaften Ausgestaltung deshalb eine Feuchtigkeit eines Elektrolyten in der Brennstoffzelle, vorzugsweise mittels einer Impedanzspektroskopie, ermittelt und ein Parameter der zyklovoltammetrischen Messung (insbesondere eine Vorschubgeschwindigkeit, ein minimales Potential und/oder ein maximales Potential) in Abhängigkeit der ermittelten Feuchtigkeit eingestellt. Beispielsweise kann mit sinkender Feuchtigkeit und somit steigender Impedanz die Vorschubgeschwindigkeit und/oder das minimale und das maximale Potential vergrößert werden.

In einer besonderen Ausführungsform umfasst das Verfahren die folgenden Schritte:

- Erzeugen von Messwerten einer zyklovoltammetrischen Messung an einer Brennstoffzelle,
- Senden der Messwerte und/oder daraus abgeleiteter Werte an eine von der Brennstoffzelle räumlich entfernte, vorzugsweise cloud-basierende, Auswerteeinrichtung für eine Ermittlung einer Gaszusammensetzung, insbesondere eines Wasserstoffüberschusses, in der Brennstoffzelle in Abhängigkeit von den gesendeten Werten.

Ein erfindungsgemäßes System zur Untersuchung einer Brennstoffzelle umfasst eine Messeinrichtung für eine zyklovoltammetrische Messung an der Brennstoffzelle und eine Auswerteeinrichtung, die ausgebildet ist zur Ermittlung einer Gaszusammensetzung in der Brennstoffzelle in Abhängigkeit von der zyklovoltammetrischen Messung, wobei die Auswerteeinrichtung zur Ermittlung einer Wasserstoffkonzentration in der Brennstoffzelle ausgebildet ist.

Bevorzugt ist die Auswerteeinrichtung ausgebildet, eine Information, insbesondere ein optisches Signal, zu erzeugen, wenn für zumindest einen Messwert der zyklovoltammetrischen Messung, und/oder zumindest einen daraus abgeleiteten Wert, ein Kriterium in Bezug auf einen Schwellwert erfüllt ist, insbesondere einen Schwellwert, der eine minimal zulässige Wasserstoffkonzentration in den Gasräumen repräsentiert. Beispielsweise kann hierzu in der Auswerteeinrichtung ein Schwellwert für einen minimal zulässigen absoluten Abstand zwischen einem minimalen Stromwert und einem maximalen Stromwert, die innerhalb eines Zyklus gemessen werden, gespeichert sein.

Gemäß einer vorteilhaften Ausgestaltung beträgt eine Vorschubgeschwindigkeit für die zyklovoltammetrische Messung weniger als 2 mV/s, vorzugsweise 1 mV/s.

Bevorzugt umfasst das erfindungsgemäße System eine Einrichtung zur Ermittlung einer Feuchtigkeit eines Elektrolyten in der Brennstoffzelle, vorzugsweise mittels Impedanzspektroskopie, wobei die Messeinrichtung ausgebildet ist, einen Parameter der zyklovoltammetrische Messung (insbesondere eine Vorschubgeschwindigkeit, ein minimales Potential und/oder ein maximales Potential) in Abhängigkeit der ermittelten Feuchtigkeit einzustellen.

Eine erfindungsgemäße Brennstoffzellenvorrichtung umfasst zumindest eine Brennstoffzelle und ein vorstehend beschriebenes System zur Untersuchung der Brennstoffzelle.

Von Vorteil weist die Brennstoffzelle einen ersten Gasraum für einen ersten Reaktanten und einen zweiten Gasraum für einen zweiten Reaktenten auf, wobei zumindest einer der Gasräume, vorzugsweise beide Gasräume, für die zyklovoltammetrische Messung eingangsseitig abschließbar ist bzw. sind.

Die für das erfindungsgemäße Verfahren und seine vorteilhaften Ausgestaltungen genannten Wirkungen und Vorteile gelten entsprechend für die erfindungsgemäßen Systeme und deren vorteilhaften Ausgestaltungen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Dabei sind einander entsprechende Teile mit jeweils gleichen Bezugszeichen versehen. Es zeigen:

FIG 1    ein aus dem Stand der Technik bekanntes Brennstoffzellenmodul mit einem Brennstoffzellenstapel in vereinfachter Darstellung,

FIG 2    einen prinzipiellen Aufbau einer PEM-Brennstoffzelle,

FIG 3    einen prinzipiellen Aufbau eines erfindungsgemäßen Systems zur Überwachung eines Lagerungszustandes einer Brennstoffzelle oder eines Brennstoffzellenstapels,

FIG 4    ein Beispiel für eine Außenansicht eines Überwachungssystems gemäß FIG 3,

FIG 5    eine beispielhafte Befestigung des Überwachungssystems nach FIG 3 an dem Brennstoffzellenmodul von FIG 1,

FIG 6    Voltammogramme von Gasatmosphären in Brennstoffzellen mit Sauerstoffüberschuss und Wasserstoffüberschuss,

FIG 7    Voltammogramme für unterschiedliche Wasserstoffkonzentrationen bzw. Gehalte von Wasserstoff in Stickstoff in den Brennstoffzellen,

FIG 8      eine grafische Darstellung des Zusammenhanges zwischen gemessener Ladungsmenge und Vorschubgeschwindigkeit der zyklovoltammetrischen Messung,

FIG 9      Stromverläufe über der Zeit bei zyklovoltammetrischen Messungen für unterschiedliche Wasserstoffkonzentrationen,

FIG 10      einen grafischen Vergleich von berechneten Wasserstoffmengen und eingestellten Wasserstoffkonzentrationen,

FIG 11      ein Überwachungssystem mit einer cloud-basierenden Auswerteeinrichtung,

FIG 12      das Überwachungssystem von FIG 11 mit einer Überwachung mehrerer Brennstoffzellenmodule.

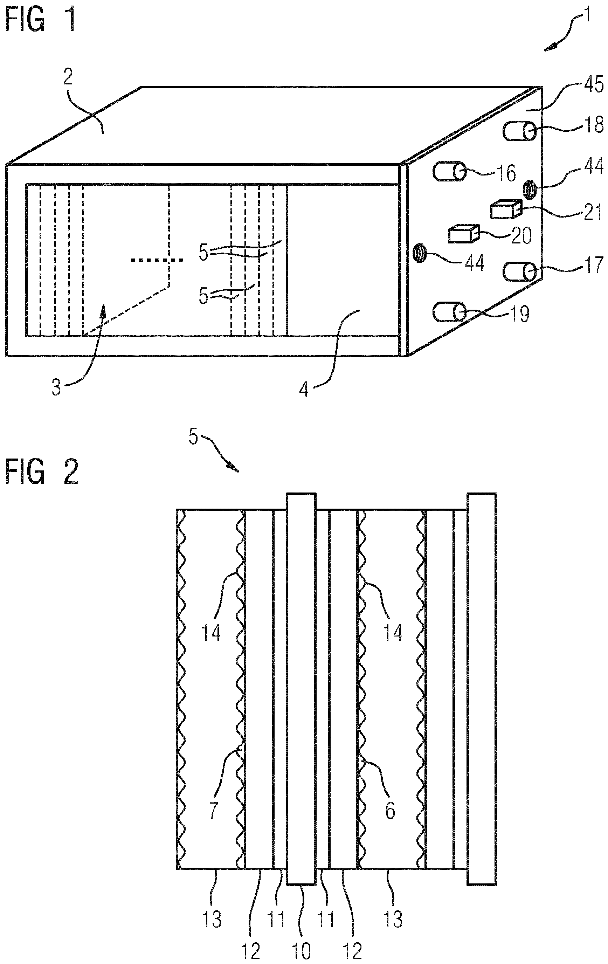

FIG 1 zeigt in vereinfachter Darstellung ein Brennstoffzellenmodul 1, das - von einem Gehäuse 2 umgeben - einen Brennstoffzellenstapel 3 und einen Betriebsteil 4 umfasst.

Der Brennstoffzellenstapel 3 besteht wiederum aus mehreren aufeinander gestapelten und hierdurch elektrisch in Reihe geschalteten einzelnen Brennstoffzellen 5, hier PEM-Brennstoffzellen.

Jede der Brennstoffzellen weist - wie vereinfacht in FIG 2 in einem Schnitt dargestellt ist - eine Membran 10 und beidseitig davon jeweils eine Katalysatorschicht 11 und eine Elektrode 12 oder Gasdiffusionsschicht auf. Daran schließt sich eine Bipolarplatte 13 an, die die elektrische Verbindung zur nächsten Brennstoffzelle 5 herstellt und in der Gasverteilerstrukturen 14 eingebracht sind, durch die Gasräume 6, 7 für die Reaktanden Wasserstoff und Sauerstoff ausgebildet sind. Die an einem Gasraum 6 für Wasserstoff anliegende Elektrode 12 wird auch Anode und die an einem Gasraum 7 für Sauerstoff anliegende Elektrode 12 wird auch Kathode genannt. Kanäle zur Zu- und Abfuhr der Reaktanden zu bzw. von den Brennstoffzellen, Dichtungen etc. sind zur Vereinfachung der Darstellung nicht dargestellt.

Das Betriebsteil 4 umfasst Anschlusstechnik, Sensoren, Ventile, Wasserabscheider, etc. des Brennstoffzellenmoduls 1.

Am betriebsteilseitigen Ende des Brennstoffzellenmoduls 1 befinden sich Anschlüsse 16, 17 für die Wasserstoffzufuhr bzw. -abfuhr und Anschlüsse 18, 19 für die Sauerstoffzufuhr bzw. - abfuhr (siehe FIG 1).

Weiterhin sind am betriebsteilseitigen Ende des Brennstoffzellenmoduls 1 elektrische Lastanschlüsse 20, 21 nach außen geführt, an die eine mit Strom des Brennstoffzellenmoduls 1 zu speisende elektrische Last (nicht dargestellt) anschließbar ist.

Weiterhin können am betriebsteilseitigen Ende des Brennstoffzellenmoduls 1 auch ein Anschluss für ein Abgreifen eines Signals eines Drucksensors, der den Druck in den Gasräumen 6, 7 der Brennstoffzellen 5 misst, und/oder ein Anschluss für ein Abgreifen eines Signals eines Temperatursensors, der eine Temperatur des Brennstoffzellenstapels 3 misst, vorhanden sein.

Bei dem Brennstoffzellenmodul 1 handelt es sich um ein in einem Lager für Brennstoffzellenmodule eingelagertes, nichtbetriebenes Modul. Die Anschlüsse 16, 17, 18, 19 sind deshalb von entsprechenden Versorgungs- und -entsorgungssystemen für Wasserstoff und Sauerstoff getrennt. Beispielsweise sind die Anschlüsse mit aufgeschraubten Deckeln gasdicht verschlossen. Außerdem sind die Lastanschlüsse 20, 21 nicht mit einer Last verbunden. Die Gasräume 6, 7 sind zur Vermeidung von Korrosion und Oxidierungen mit Wasserstoff beaufschlagt.

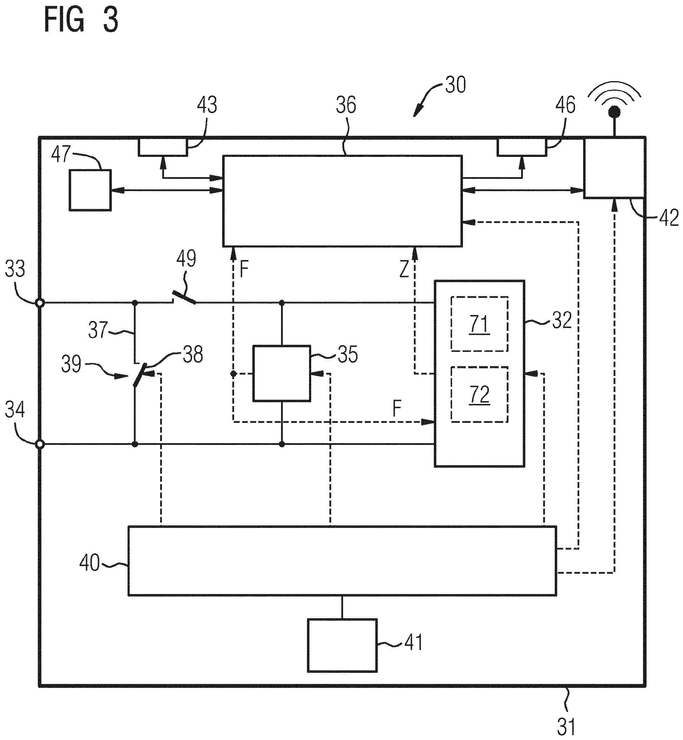

FIG 3 zeigt in prinzipieller Darstellung ein erfindungsgemäßes System 30 zur Untersuchung des Brennstoffzellenmoduls 1, insbesondere zur Überwachung des Lagerungszustandes des Brennstoffzellenmoduls 1.

Das System 30 umfasst - umgeben von einem Gehäuse 31 - eine Messeinrichtung 32 für eine zyklovoltammetrische Messung an dem Brennstoffzellenstapel 3 des Brennstoffzellenmoduls 1. Die Messeinrichtung 32 ist hierzu über Kontakte 33, 34 mit den elektrischen Lastanschlüssen 20, 21 des Brennstoffzellenstapels 3 elektrisch verbindbar. Die Messeinrichtung 32 erzeugt eine Messspannung an den Kontakten 33, 34 bzw. den elektrischen Lastanschlüssen 20, 21 und misst einen dadurch erzeugten Strom durch den Brennstoffzellenstapel 3. Die Messeinrichtung 32 umfasst hierzu eine nur andeutungsweise dargestellte Spannungsquelle 71 zur Erzeugung einer zyklovoltammetrischen Messspannung (d.h. ein definierter Potentialbereich wird zyklisch durchfahren) und eine Einrichtung 72 zur Messung des Stromes, der von dem Kontakt 33 über die Messeinrichtung 32 und den Kontakt 34 fließt.

Das System 30 umfasst weiterhin eine Auswerteeinrichtung 36, die ausgebildet ist zur Ermittlung einer Gaszusammensetzung, insbesondere eines Wasserstoffüberschusses, in dem Brennstoffzellenstapel 3 in Abhängigkeit von der zyklovoltammetrischen Messung.

Weiterhin umfasst das System 30 eine Einrichtung 35 zur Ermittlung einer Feuchtigkeit des Elektrolyten der Brennstoffzellen mittels Impedanzspektroskopie. Eine derartige Einrichtung ist beispielsweise in der EP 3 151 321 A1 beschrieben.

Messwerte Z der zyklovoltammetrischen Messung werden an die Auswerteeinrichtung 36 und Messwerte F der Feuchtigkeitsmessung werden sowohl an die Auswerteeinrichtung 36 als auch an die Messeinrichtung 32 übergeben. Die Messeinrichtung 32 ist ausgebildet, eine Vorschubgeschwindigkeit der Spannung bei der zyklovoltammetrischen Messung in Abhängigkeit der Messwerte F der Feuchtigkeitsmessung einzustellen.

Über einen elektrischen Abzweig 37 mit einem Schalter 38 ist ein Kurzschließer 39 realisiert und somit ein elektrischer Kurzschluss an den Kontakten 33, 34 und somit an den Lastanschlüssen 20, 21 anlegbar bzw. von diesen trennbar. Über einen zwischen den elektrischen Abzweig 37 und die Strommesseinrichtung 35 geschalteten Schalter 49 ist die Messspannung der Messeinrichtung 32 oder ein Messstrom der Einrichtung 35 an die Kontakte 33, 34 bzw. Lastanschlüsse 20, 21 anlegbar bzw. von diesen trennbar.

Eine Steuereinrichtung 40 steuert die einzelnen Komponenten 32, 35, 36, 38, 49, insbesondere versorgt sie diese mit elektrischer Energie aus einem Energiespeicher 41 (z.B. einer Batterie). Durch den Energiespeicher 41 ist dabei für eine bestimmte Zeit, z.B. ein Jahr, eine netzunabhängige, autarke Stromversorgung für das System 30 möglich.

Die Steuereinrichtung 40 steuert den Kurzschließer 39 dabei derart an, dass die Kontakte 33, 34 bzw. Lastanschlüsse 20, 21 kurzgeschlossen sind, wenn keine Messung erfolgt. Von Vorteil erfolgt zur Energieeinsparung die Ansteuerung derart, dass die Lastanschlüsse 20, 21 ohne eine Spannungserregung durch die Steuereinrichtung 40 kurzgeschlossen und mit einer Spannungserregung durch die Steuereinrichtung 40 nicht kurzgeschlossen sind.

Die Steuereinrichtung 40 löst diskontinuierlich, vorzugsweise in periodischen, zeitlichen Abständen hintereinander zuerst eine Feuchtigkeitsmessung durch die Einrichtung 35 und anschließend eine zyklovoltammetrische Messung durch die Messeinrichtung 32 aus. Die Messeinrichtung 32 stellt dabei die Vorschubgeschwindigkeit der Spannung bei der zyklovoltammetrischen Messung in Abhängigkeit der vorher erhaltenen Messwerte F der Feuchtigkeitsmessung ein.

Von der Steuereinrichtung 40 werden für die Dauer einer derartigen Messung der Schalter 38 geöffnet und der Schalter 49 geschlossen. Nach Abschluss der Messung werden von der Steuereinrichtung 40 der Schalter 38 wieder geschlossen und der Schalter 49 geöffnet.

Das System 30 umfasst optional eine mit der Auswerteeinrichtung 36 gekoppelte Sendeeinrichtung 42 zur drahtlosen Kommunikation mit einer übergeordneten Überwachungseinrichtung sowie eine Sendeeinrichtung 43 für eine drahtgebundene Kommunikation mit einer übergeordneten Überwachungseinrichtung.

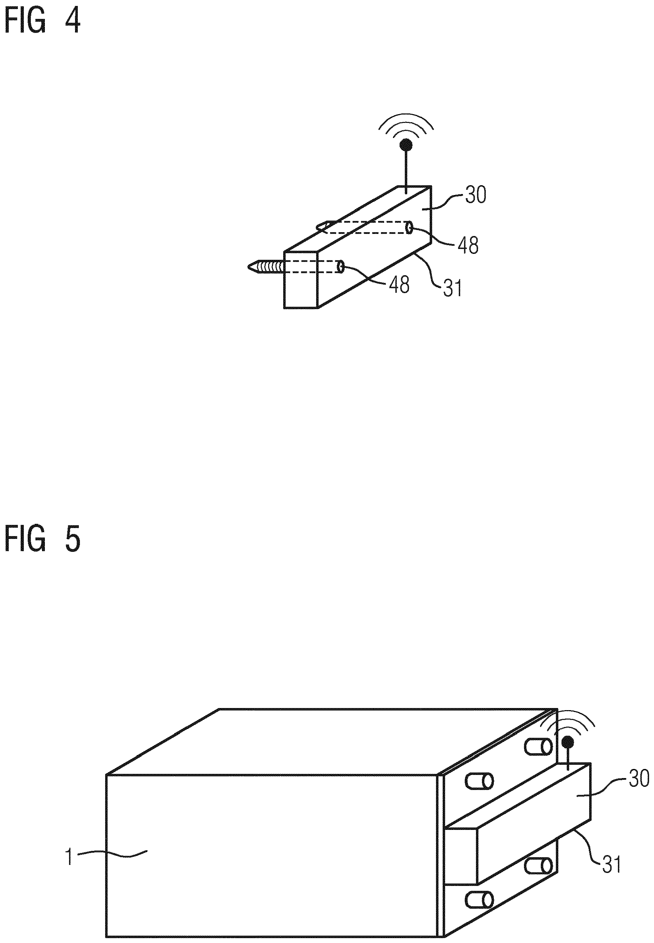

Das Gehäuse 31 des Systems 30 weist weiterhin Schnittstellen zur lösbaren mechanischen Befestigung, insbesondere zum lösbaren Anschrauben oder Aufstecken, des Systems 30 an das betriebsteilseitige Ende des Brennstoffzellenmoduls 1 und zur elektrischen Kontaktierung der Anschlusskontakte 33, 34 mit den elektrischen Lastanschlüssen 20, 21 des Brennstoffzellenmoduls 1 auf. Weiterhin können auch Schnittstellen für einen Anschluss eines Drucksensors, der den Druck in den Gasräumen 6, 7 der Brennstoffzellen 5 misst, und/oder einen Anschluss eines Temperatursensors, der eine Temperatur des Brennstoffzellenstapels 3 misst, vorhanden sein. Umgekehrt weist auch das Brennstoffzellenmodul 1 eine Schnittstelle zur Aufnahme des Systems 30 auf. Für die Schnittstellen gibt es unzählige Ausführungsmöglichkeiten, z.B. in Form von Steckverbindungen oder Schraubverbindungen. Beispielhaft ist gemäß FIG 4 das Gehäuse 31 über mehrere Schrauben 48 in Gewindebohrungen 44 einschraubbar, die in eine Abschlussplatte 45 des Moduls 1 eingearbeitet sind (siehe FIG 1). FIG 5 zeigt beispielshaft das auf das Brennstoffzellenmodul 1 montierte System 30.

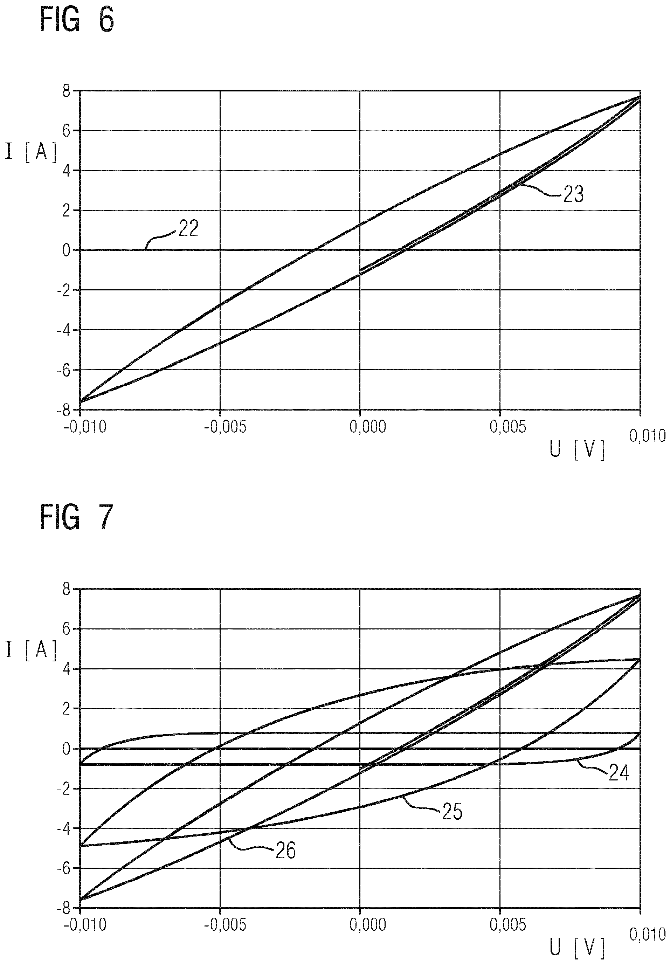

Anhand von FIG 6 bis 10 wird nun beispielhaft die Erfindung und deren Anwendung in einem durch das System 30 realisierten Untersuchungs- und Überwachungsverfahren erläutert. Dabei wird beispielhaft ausgegangen von einem Brennstoffzellenstapel 3, der aus drei Brennstoffzellen 5 besteht. Vor Beginn der nachfolgend beschriebenen Messungen wurden die Brennstoffzellen 5 abgeschaltet, d.h. die Stromentnahme und die Reaktantenzufuhr gestoppt. Die Gasräume wurden für 5 Minuten mit einem befeuchteten Gas durchspült. Anschließend wurden die Gasräume der versorgungs- und entsorgungsseitig in Reihe geschalteten Brennstoffzellen eingangsseitig, d.h. eingangs der in Strömungsrichtung zuerst angeordneten Brennstoffzelle, und ausgangsseitig, d.h. ausgangs der in Strömungsrichtung zuletzt angeordneten Brennstoffzelle, abgesperrt. Während der Messung wurde also kein Reaktanten-Gas zu- oder abgeführt. Die zyklovoltammetrische Messung erfolgt mittels der Lastanschlüsse über die äußeren Polplatten des Brennstoffzellenstapels.

Nach einigen Stunden stellt sich ein Temperatur-, Konzentrations- und Druck-Gleichgewischt zwischen den beiden Gasräumen 6, 7 der Brennstoffzellen 5 ein. Im Falle eines Wasserstoffüberschusses in sämtlichen Gasräumen 6, 7 der Brennstoffzellen 3 sollte dann kein Sauerstoff in den Gasräumen 6,7 mehr vorhanden sein, da die Reaktionen dann solange abgelaufen sein müssten, dass sämtlicher Sauerstoff verbraucht worden ist. Umgekehrtes gilt für den Fall eines Sauerstoffüberschusses.

Die zyklovoltammetrische Messung wurde mit folgenden Einstellungen vorgenommen:

| | |
|---|---|
| Zyklenanzahl: | 2 |
| Start- und Endpotential: | 0V |
| Haltezeit: | 1s |
| Min. und max. Potential: | -10 mV bis +10 mV |

(fortgesetzt)

| Vorschubgeschwindigkeit: | 3*0,33 mV/s ≈ 1 mV/s |
| Temperatur: | ca. 25 °C |

In FIG 6 ist für eine zyklovoltammetrische Messung ein gemessener Strom I über einem eingestellten Potential U dargestellt. Dabei ist mit 22 eine Messkurve in Form eines Voltammogrammes für eine Atmosphäre mit Sauerstoffüberschuss in sämtlichen Gasräumen 6,7 der Brennstoffzellen 3 und mit 23 ein Voltammogramm für Wasserstoffüberschuss in sämtlichen Gasräumen 6,7 der Brennstoffzellen 3 bezeichnet. Wie aus FIG 6 ersichtlich ist, sehen die Voltammogramme von Sauerstoffüberschuss- und Wasserstoffüberschussatmosphäre sehr unterschiedlich aus. Mit Hilfe einer zyklovoltammetrischen Messung lässt sich somit eine Gaszusammensetzung in einer Brennstoffzelle ermitteln bzw. zwischen unterschiedlichen Gaszusammensetzungen zu unterscheiden (hier zwischen einem Wasserstoff- und einem Sauerstoffüberschuss). Ist eine Brennstoffzelle in beiden Gasräumen überwiegend mit Stickstoff befüllt ergibt sich ein ähnliches Voltammogramm wie bei dem Voltammogramm 22 für Sauerstoffüberschuss. Allerdings ist der Fall, dass nach einer Abschaltung im Wesentlichen nur noch Stickstoff vorhanden ist, sehr unwahrscheinlich, da dann die genau passenden stöchiometrischen Mengen von Wasserstoff und Sauerstoff in der Brennstoffzelle vorgelegen haben müssten.

FIG 7 zeigt Voltammogramme für unterschiedliche Wasserstoffkonzentrationen bzw. Gehalte von Wasserstoff in Stickstoff in den Brennstoffzellen 3. Dabei ist mit 24 ein Voltammogramm für einen geringen Wasserstoffgehalt im Vergleich zu Stickstoff, mit 25 ein Voltammogramm für einen hohen Wasserstoffgehalt im Vergleich zu Stickstoff und mit 26 ein Voltammogramm für den Fall, dass kein Stickstoff in den Gasräumen 6, vorhanden ist, bezeichnet. Wie ersichtlich ist, werden die Voltammogramme mit sinkendem Wasserstoffgehalt immer flacher und nähern sich geringeren Strömen an. Mit Hilfe einer zyklovoltammetrischen Messung lässt sich somit zwischen unterschiedliche Wasserstoffkonzentrationen bzw. -gehalten unterscheiden.

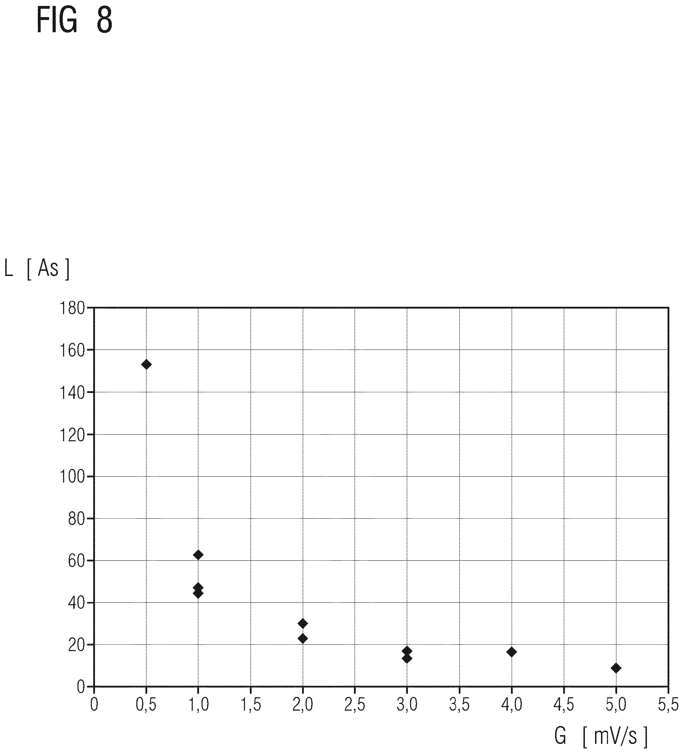

Um festzustellen, welchen Einfluss die Vorschubgeschwindigkeit auf die Ergebnisse der zyklovoltammetrischen Messung hat, wurden Versuche mit unterschiedlichen Vorschubgeschwindigkeiten durchgeführt. In FIG 8 ist die Ladungsmenge L über der Vorschubgeschwindigkeit G für mehrere Messpunkte dargestellt. Der Wasserstofftransport steigt eindeutig mit sinkender Vorschubgeschwindigkeit G. Dieser Effekt beruht darauf, dass die Adsorption von Wasserstoff auf dem Katalysator umso mehr Zeit hat, je geringer die Vorschubgeschwindigkeit G ist. Es werden mehr Plätze am Katalysator belegt und mehr Wasserstoff umgesetzt. Wiederum sinkt die Messgenauigkeit bei höheren Vorschubgeschwindigkeiten G aufgrund der geringeren übertragenen Ladungsmenge. Im Bereich von ca. 1 mV/s (entspricht ca. Z*0,33 mV/s, wobei hier Z = 3 für 3 Brennstoffzellen ist), liegt ein Optimum zwischen Messgenauigkeit und Dauer der Messungen.

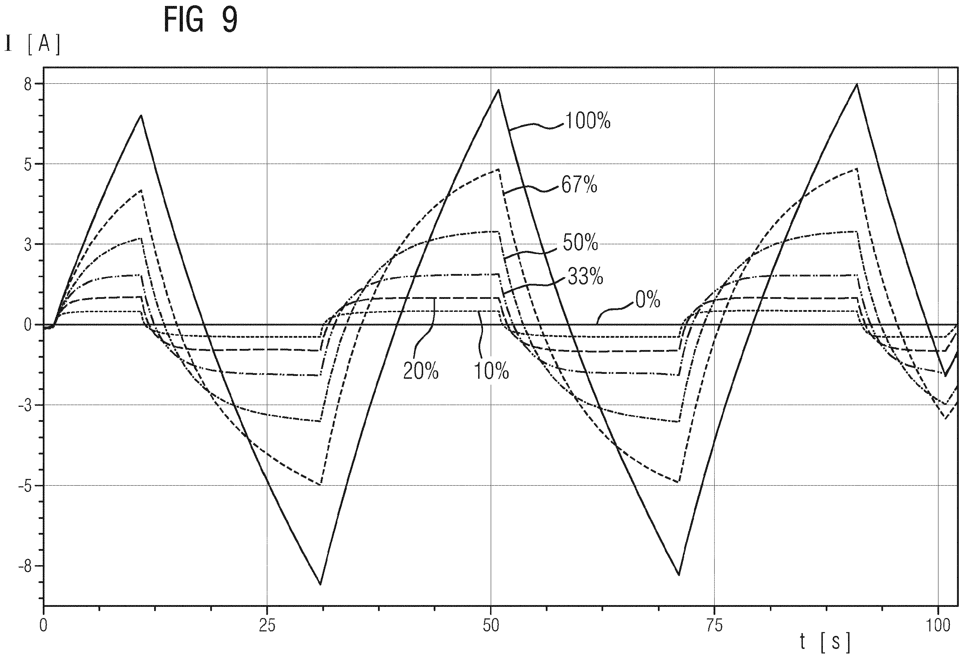

FIG 9 zeigt über der Zeit t den Strom I für eine Zyklus eines Voltammogrammes für unterschiedliche Konzentrationen von Wasserstoff in einem Wasserstoff/Stickstoff-Gemisch in den Gasräumen 6,7 der Brennstoffzellen 3. Für die unterschiedlichen Messungen wurde dabei am Eingang der Brennstoffzellen ein jeweils gleiches Druckniveau eingestellt.

Die zugehörige Wasserstoffmenge $n_{H2}$ kann dann wie folgt aus dem minimalen Stromwert $I_{unten}$ und dem maximalen Stromwert $I_{oben}$ berechnet werden:

$Q$ Ladungsmenge

$$nH_2 = \frac{\mid I\,unten - I\,oben \mid}{zF} * t$$

t Zeit für einen
Zyklus, hier: 20 sec.
z Anz übertragener Elektronen bei Reaktion, hier: 2
F Faraday Konstante

$$nH_2 \left[ \begin{array}{c} \frac{A*s}{\frac{C}{mol}} = \frac{C}{\frac{C}{mol}} = mol \end{array} \right]$$

Die Ergebnisse sind in der Tabelle 1 aufgeführt:

Tabelle 1: Auswertung über die Abstände

| Menge H2 in % | Absoluter Abstand | Wasserstoffmenge in mol (q = l /zF) * 20 s |
|---|---|---|
| 0 | 0,0765 | 7,92E-06 |
| 1 | 0,110 | 1,14E-05 |
| 2 | 0,130 | 1,35E-05 |
| 5 | 0,400 | 4,15E-05 |
| 5 | 0,400 | 4,15E-05 |
| 10 | 0,877 | 9,09E-05 |
| 10 | 0,872 | 9,04E-05 |
| 20 | 1,67 | 1,73E-04 |
| 33 | 3,30 | 3,42E-04 |
| 50 | 6,04 | 6,26E-04 |
| 67 | 9,81 | 1,02E-03 |
| 100 | 15,3 | 1,59E-03 |

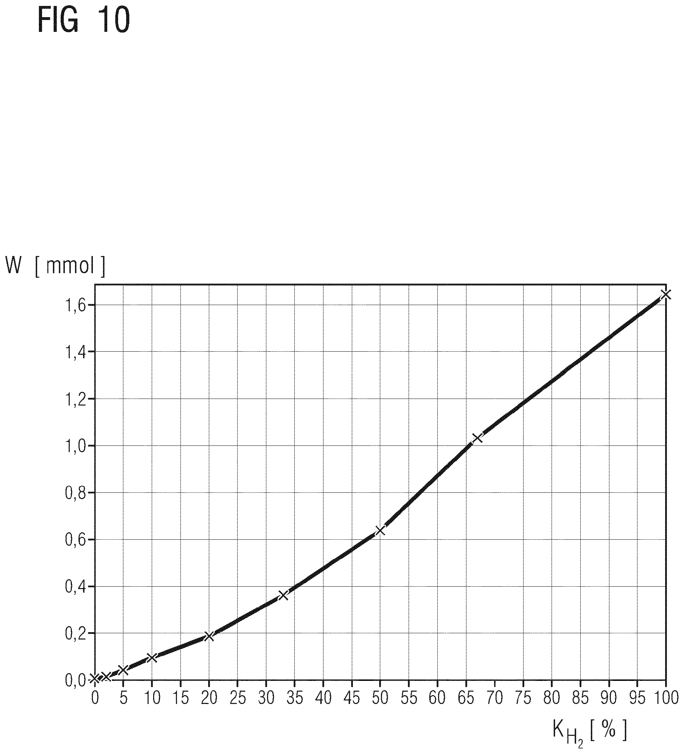

Die Ergebnisse sind auch in FIG 10 grafisch dargestellt. Diese zeigt die berechnete Wasserstoffmenge W über der jeweils eingestellten Wasserstoffkonzentration $K_{H2}$. Es ist ein fast linearer Zusammenhang zwischen den absoluten Abständen (d.h. Abstand zwischen minimalem Stromwert $I_{unten}$ und maximalem Stromwert $I_{oben}$) bzw. der daraus berechneten Wasserstoffmengen und der eingestellten Wasserstoffkonzentration zu erkennen. Anhand der Abstände zwischen den minimalen und maximalen Stromwerten während eines Zyklus der zyklovoltammetrischen Messung kann somit besonders einfach und schnell eine Wasserstoffmenge und daraus eine Wasserstoffkonzentration ermittelt werden.

Alternativ kann die Berechnung der Wasserstoffmenge W beispielsweise auch über das ideale Gasgesetz unter Berücksichtigung der Anfangsdrücke und Enddrücke in den Gasräumen 6,7 während eines Voltammetrie-Zyklus oder durch Ableitung der umgesetzten Wasserstoffmenge anhand einer Bestimmung der Ladungsmenge durch Integration des Stroms über die Zeit erfolgen.

Grundsätzlich muss bei einem Vergleich verschiedener Voltammogramme darauf geachtet werden, dass die Drücke gleich sind, um eine Vergleichbarkeit zu gewährleisten. Bei einem vergleichsweise höheren Druck sind mehr Wasserstoffmoleküle im System, welche durch die Membran gepumpt werden können. Ein höherer Druck bedeutet eine höhere Wasserstoffkonzentration. Dadurch wird eine größere Ladungsmenge gemessen. Der Einfluss der Temperatur ist im Vergleich zum Druck sehr gering. Bei erhöhter Temperatur wird die Ladungsmenge nur geringfügig größer. Dies kann an einer geringfügig beschleunigten Reaktionsrate liegen. Es ist daher möglich, Voltammogramme bei unterschiedlichen Temperaturen zu vergleichen.

Zur Erhöhung der Genauigkeit der Messungen wird deshalb vorzugsweise der Druck in den Gasräumen der Brennstoffzellen gemessen und die Messwerte werden auf einen konstanten Druck korrigiert. Von Vorteil wird auch die Temperatur der Brennstoffzellen gemessen und die Messwerte werden auf eine konstante Temperatur korrigiert. Zusätzlich kann auch der Alterungszustand der Brennstoffzellen bei der Auswertung berücksichtigt werden.

Wiederum bezugnehmend auf FIG 3 steuert die Steuereinrichtung 40 nun das System 30 derart, dass die Ermittlung der Elektrolytfeuchtigkeit und des Wasserstoffüberschusses diskontinuierlich, vorzugsweise nur in periodischen zeitlichen Abständen wie einmal pro Tag, Woche oder Monat, erfolgt.

Außerhalb der Zeiten dieser Messungen sind die elektrischen Lastanschlüsse 20, 21 des Moduls 1 kurzgeschlossen und es wird somit ein unerwünschter Potenzialaufbau vermieden.

Die ermittelten Messwerte, z.B. Maxima und Minima des Stromes innerhalb eines Zyklus, oder daraus abgeleitete Werte, z.B. absoluter Abstand zwischen diesen Messwerten oder ermittelte Werte für eine Wasserstoffmenge oder eine Wasserstoffkonzentration, werden in der Auswerteeinrichtung 36 mit zumindest einem in einem Speicher 47 gespeicherten Schwellwert verglichen und ein Fehler-Signal erzeugt und mittels einer optischen oder akustischen Anzeige 46 nach außen signalisiert, wenn ein Kriterium in Bezug auf den Schwellwert erfüllt ist, z.B. der Schwellwert erreicht wird. Vorzugsweise wird durch die Auswerteeinrichtung 36 nach mehreren Schwellwert-Vergleichen, die zu keiner Erzeugung einer Fehler-Information führten, ein Lebens-Signal erzeugt und ebenfalls mittels der optischen oder akustischen Anzeige 46 nach außen signalisiert. Lagerpersonal erhält somit eine Information, dass die Überwachung funktioniert und kein Fehler bzw. ein Fehler vorliegt.

Die ermittelten Messwerte und/oder daraus abgeleitete Werte und/oder die Fehler- und Lebenssignale können von der Auswerteeinrichtung 36 zusammen mit Zeitstempeln auch in dem für Lagerpersonal auslesbaren Speicher 47 abgespeichert und/oder über die Sendeeinrichtungen 42, 43 an ein zentrales, insbesondere Cloud-basierendes, Überwachungssystem übertragen werden, das beispielsweise vom Hersteller der Brennstoffzellen betrieben wird. Es können somit eine Vielzahl von Brennstoffzellenmodulen 1 überwacht und beispielsweise Serienfehler leichter identifiziert werden.

Entsprechende Funktionalitäten können auch in Bezug auf die Überwachung der Elektrolyt-Feuchtigkeit vorhanden sein.

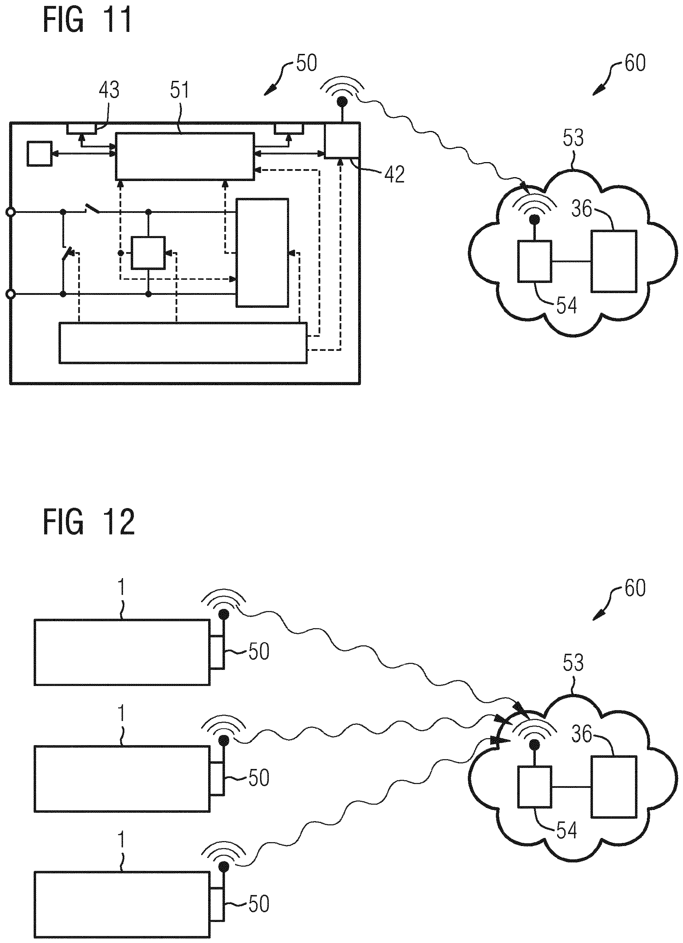

Ein in FIG 11 gezeigtes System 60 unterscheidet sich von dem in FIG 3 gezeigten System 30 dadurch, dass es in zwei Teilsysteme aufgeteilt ist.

Ein erstes Teilsystem ist als Messsystem 50 ausgebildet und befindet sich lokal vor Ort an dem Brennstoffzellenmodul 1 und umfasst die Messeinrichtungen 32, 35 sowie die Sendeeinrichtungen 42, 43.

Eine zwischen die Messeinrichtungen 32, 35 sowie die Sendeeinrichtungen 42, 43 geschaltete Einrichtung 51 dient zur Zusammenführung der Messwerte oder daraus abgeleiteter Werte der Messeinrichtungen 32, 35 und deren Aufbereitung für die Übertragung mittels der Sendeeinrichtungen 42, 43.

Ein zweites, von dem Brennstoffzellenmodul 1 und dem Messsystem 50 räumlich entferntes, Teilsystem ist als ein Auswertesystem 53 ausgebildet und umfasst die Auswerteeinrichtung 36 und eine Empfangseinrichtung 54 für die von dem Messsystem 50 empfangenen Werte.

Gemäß FIG 12 kann das System 60 bzw. das Auswertesystem 53 auch zur Überwachung mehrerer Brennstoffzellenmodule 1 mit jeweils einem daran montierten Messsystem 50 genutzt werden.

Beispielhaft ist in FIG 11 und 12 eine Übertragung von Werten von dem Messsystem 50 zu dem Auswertesystem 53 drahtlos mittels der Sendeeinrichtung 42 und der Empfangseinrichtung 54 gezeigt (z.B. auf Basis Mobilfunk 3G, 4G oder 5G). Die Übertragung kann aber auch drahtgebunden mittels der Sendeeinrichtung 43 sein (z.B. auf Basis Ethernet) oder eine Kombination davon (z.B. eine Kombination von WLAN und Ethernet).

Falls zwischen dem Messsystem 50 und dem Auswertesystem 53 eine bidirektionale Kommunikation möglich ist, kann das Ergebnis der Auswertung, z.B. ein Fehlersignal, oder auch ein Lebenssignal, von dem Auswertesystem 53 an das Messsystem 50 übertragen und an diesem beispielsweise mittels der optischen oder akustischen Anzeige 46 ausgegeben werden.

Durch die Erfindung ist somit eine Überwachung von lagernden bzw. nicht-betriebenen Brennstoffzellen 5 ohne Eingriffe in die Brennstoffzellen möglich. Es ist lediglich ein Zugang zu den Lastanschlüssen 20, 21 notwendig.

Die Erfindung kann aber auch sehr vorteilhaft zur Überwachung und/oder Steuerung eines Abschaltvorganges des Brennstoffzellenmoduls 1 genutzt werden, insbesondere um dabei eine gewünschte Gasatmosphäre in den Brennstoffzellen 5 einzustellen, wie z.B. einen Wasserstoffüberschuss.

Ein derartiges Abschaltverfahren ist z.B. in der EP 0914 685 B1 beschrieben. Dabei werden zur Erzielung eines Wasserstoffüberschusses in einem ersten Schritt durch Schließen einer Sauerstoffeinlassventils eine Sauerstoffzufuhr zu den Gasräumen 7 unterbrochen. Der verbliebene Sauerstoff in den Gasräumen wird nun durch elektrochemische Verbindung mit Wasserstoff und erzeugen von elektrischem Strom verbraucht. Wenn der Sauerstoff weitgehend abgebaut ist, wird in einem zweiten Schritt durch Schließen eines Wasserstoffeinlassventils eine Wasserstoffzufuhr zu den Gasräumen 6 unterbrochen.

In weiteren Schritten können die Gasräume 6, 7 mit Stickstoff gespült und anschließend für eine Lagerung mit Wasserstoff befüllt werden.

Sämtliche Vorgänge können durch zyklovoltammetische Messungen begleitet werden, um die jeweils aktuelle Gaszusammensetzung in den Gasräumen 6,7, zu ermitteln und ggf. diese Kenntnisse sogar für eine optimale Steuerung der Vorgänge zu nutzen.

**Patentansprüche**

1. Verfahren zur Untersuchung einer Brennstoffzelle (5) mittels einer zyklovoltammetrischen Messung, wobei mittels der zyklovoltammetrischen Messung eine Gaszusammensetzung in der Brennstoffzelle (5) ermittelt wird, wobei die Brennstoffzelle (5) einen ersten Gasraum (6) für einen ersten Reaktanten und einen zweiten Gasraum (7) für einen zweiten Reaktanten aufweist, wobei während der zyklovoltammetrischen Messung zumindest einem der beiden Gasräume, insbesondere beiden Gasräumen, kein Reaktant zugeführt wird, **dadurch gekennzeichnet, dass** anhand der zyklovoltammetrischen Messung eine Wasserstoffkonzentration in den Gasräumen (6, 7) ermittelt wird.

2. Verfahren nach Anspruch 1, **dadurch gekennzeichnet, dass** eine Information, insbesondere ein optisches Signal, erzeugt wird, wenn für zumindest einen Messwert der zyklovoltammetrischen Messung, und/oder zumindest einen daraus abgeleiteten Wert, ein Kriterium in Bezug auf einen Schwellwert erfüllt ist, insbesondere einen Schwellwert, der eine minimal zulässige Wasserstoffkonzentration in den Gasräumen (6, 7) repräsentiert.

3. Verfahren nach einem der vorhergehenden Ansprüche, **dadurch gekennzeichnet, dass** eine Vorschubgeschwindigkeit für die zyklovoltammetrische Messung der Brennstoffzelle weniger als 0,7 mV/s beträgt, insbesondere zwischen 0,15 mV/s und 0,5 mV/s beträgt.

**4.** Verfahren nach einem der vorhergehenden Ansprüche, **dadurch gekennzeichnet, dass** eine Feuchtigkeit eines Elektrolyten (10) in der Brennstoffzelle (5), vorzugsweise mittels Impedanzspektroskopie, ermittelt wird und ein Parameter der zyklovoltammetrischen Messung, insbesondere eine Vorschubgeschwindigkeit, ein minimales Potential und/oder ein maximales Potential, in Abhängigkeit der ermittelten Feuchtigkeit eingestellt wird.

**5.** Verfahren zur Untersuchung einer Brennstoffzelle (5) nach einem der Ansprüche 1 bis 4 mit folgenden Schritten:

- Erzeugen von Messwerten (Z) einer zyklovoltammetrischen Messung an einer Brennstoffzelle (5),
- Senden der Messwerte (Z) und/oder daraus abgeleiteter Werte an eine von der Brennstoffzelle (5) räumlich entfernte, vorzugsweise cloud-basierende, Auswerteeinrichtung (36) für eine Ermittlung einer Gaszusammensetzungin der Brennstoffzelle (5) in Abhängigkeit von den gesendeten Werten.

**6.** Verwendung des Verfahrens nach einem der Ansprüche 1 bis 5 zur Überwachung eines Zustandes einer lagernden oder nicht-betriebenen Brennstoffzelle (5).

**7.** Verwendung des Verfahrens nach einem der Ansprüche 1 bis 5 zur Überwachung und/oder Steuerung eines Abschaltvorganges einer Brennstoffzelle (5).

**8.** System (30) zur Untersuchung einer Brennstoffzelle (5), umfassend eine Messeinrichtung (32) für eine zyklovoltammetrische Messung an der Brennstoffzelle (5), **dadurch gekennzeichnet, dass** es weiterhin eine Auswerteeinrichtung (36) umfasst, die ausgebildet ist zur Ermittlung einer Gaszusammensetzung in der Brennstoffzelle (5) in Abhängigkeit von der zyklovoltammetrischen Messung, **dadurch gekennzeichnet, dass** die Auswerteeinrichtung (36) ausgebildet ist zur Ermittlung einer Wasserstoffkonzentration in der Brennstoffzelle.

**9.** System (30) nach Anspruch 8, **dadurch gekennzeichnet, dass** die Auswerteeinrichtung (36) ausgebildet ist, eine Information, insbesondere ein optisches Signal, zu erzeugen, wenn für zumindest einen Messwert (Z) der zyklovoltammetrischen Messung, und/oder zumindest einen daraus abgeleiteten Wert, ein Kriterium in Bezug auf einen Schwellwert erfüllt ist, insbesondere einen Schwellwert, der eine minimal zulässige Wasserstoffkonzentration in den Gasräumen repräsentiert.

**10.** System (30) nach einem der Ansprüche 8 oder 9, **gekennzeichnet durch** eine Einrichtung (35)zur Ermittlung einer Feuchtigkeit eines Elektrolyten (10) in der Brennstoffzelle (5), vorzugsweise mittels Impedanzspektroskopie, wobei die Messeinrichtung (32) ausgebildet ist, einen Parameter der zyklovoltammetrischen Messung, insbesondere eine Vorschubgeschwindigkeit, ein minimales Potential und/oder ein maximales Potential, in Abhängigkeit der ermittelten Feuchtigkeit einzustellen.

**11.** Brennstoffzellenvorrichtung (1) mit zumindest einer Brennstoffzelle (5) und mit einem System (30) zur Untersuchung der Brennstoffzelle (5) gemäß zumindest einem der Patentansprüche 8 bis 10.

**Claims**

**1.** Method of examining a fuel cell (5) by means of a cyclic voltammetry analysis, wherein the cyclic voltammetry analysis is used to ascertain a gas composition in the fuel cell (5), wherein the fuel cell (5) has a first gas space (6) for a first reactant and a second gas space (7) for a second reactant, wherein no reactant is supplied at least to one of the two gas spaces, especially to either gas space, during the cyclic voltammetry analysis, **characterized in that** the cyclic voltammetry analysis is used to ascertain a concentration of hydrogen in the gas spaces (6, 7).

**2.** Method according to Claim 1, **characterized in that** a piece of information, especially an optical signal, is generated when a criterion in relation to a threshold value is satisfied for at least one measurement in the cyclic voltammetry analysis and/or at least one value derived therefrom, especially a threshold value representing a minimum permissible concentration of hydrogen in the gas spaces (6, 7).

**3.** Method according to either of the preceding claims, **characterized in that** a scan rate for the cyclic voltammetry analysis of the fuel cell is less than 0.7 mV/s, especially between 0.15 mV/s and 0.5 mV/s.

**4.** Method according to any of the preceding claims, **characterized in that** a moisture content of an electrolyte (10) in the fuel cell (5) is ascertained, preferably by means of impedance spectroscopy, and a parameter from the cyclic voltammetry analysis, especially a scan rate, a minimum potential and/or a maximum potential, is adjusted depending on the moisture content ascertained.

5. Method of examining a fuel cell (5) according to any of Claims 1 to 4, comprising the following steps:

   - generating measurements (Z) from a cyclic voltammetry analysis on a fuel cell (5),
   - transmitting the measurements (Z) and/or values derived therefrom to an evaluation device (36) that is spatially separated from the fuel cell (5) and is preferably cloud-based, for ascertainment of a gas composition in the fuel cell (5) depending on the values transmitted.

6. Use of the method according to any of Claims 1 to 5 for monitoring of a state of a stored or nonoperational fuel cell (5) .

7. Use of the method according to any of Claims 1 to 5 for monitoring and/or control of a shutdown operation of a fuel cell (5) .

8. System (30) for examining a fuel cell (5), comprising an analysis device (32) for a cyclic voltammetry analysis on the fuel cell (5), **characterized in that** it further comprises an evaluation device (36) designed to ascertain a gas composition in the fuel cell (5) depending on the cyclic voltammetry analysis, **characterized in that** the evaluation device (36) is designed to ascertain a concentration of hydrogen in the fuel cell.

9. System (30) according to Claim 8, **characterized in that** the evaluation device (36) is designed to generate a piece of information, especially an optical signal, when a criterion in relation to a threshold value is satisfied for at least one measurement (Z) in the cyclic voltammetry analysis and/or at least one value derived therefrom, especially a threshold value representing a minimum permissible concentration of hydrogen in the gas spaces.

10. System (30) according to Claim 8 or 9, **characterized by** a device (35) for ascertaining a moisture content of an electrolyte (10) in the fuel cell (5), preferably by means of impedance spectroscopy, wherein the analysis device (32) is designed to adjust a parameter from the cyclic voltammetry analysis, especially a scan rate, a minimum potential and/or a maximum potential, depending on the moisture content ascertained.

11. Fuel cell apparatus (1) having at least one fuel cell (5) and having a system (30) for examining the fuel cell (5) according to at least one of Claims 8 to 10.

**Revendications**

1. Procédé d'analyse d'une pile (5) à combustible au moyen d'une mesure cyclovoltamétrique, dans lequel on détermine au moyen de la mesure cyclovoltamétrique une composition du gaz dans la pile (5) à combustible, dans lequel la pile (5) à combustible a un premier espace (6) pour du gaz pour un premier réactif et un deuxième espace (7) pour du gaz pour un deuxième réactif, dans lequel, pendant la mesure cyclovoltamétrique, on n'envoie pas de réactif à au moins les des deux espaces pour du gaz, notamment aux deux espaces pour du gaz, **caractérisé en ce que** l'on détermine, à l'aide de la mesure cyclovoltamétrique, une concentration en hydrogène dans les espaces (6, 7) pour du gaz.

2. Procédé suivant la revendication 1, **caractérisé en ce que** l'on produit une information, notamment un signal optique, si, pour au moins une valeur de mesure de la mesure cyclovoltamétrique et/ou au moins une valeur qui s'en déduit, un critère se rapportant une valeur de seuil est satisfait, notamment une valeur de seuil, qui représente une concentration admissible au minimum de l'hydrogène dans les espaces (6, 7) pour du gaz.

3. Procédé suivant l'une des revendications précédentes, **caractérisé en ce qu'**une vitesse d'avance pour la mesure cyclovoltamétrique de la pile à combustible est plus petite que 0,7 mV/s, notamment comprise entre 0,15 mV/s et 0,5 mV/s.

4. Procédé suivant l'une des revendications précédentes, **caractérisé en ce que** l'on détermine une humidité d'un électrolyte (10) dans la pile (5) à combustible, de préférence au moyen d'une spectroscopie d'impédance, et on règle, en fonction de l'humidité déterminée, un paramètre de la mesure cyclovoltamétrique, notamment une vitesse d'avance, un potentiel minimum et/ou un potentiel maximum.

5. Procédé d'analyse d'une pile (5) à combustible suivant l'une des revendications 1 à 4, comprenant les stades suivants :

   - productions de valeurs (Z) de mesure d'une mesure cyclovoltamétrique sur une pile (5) à combustible,
   - envoi des valeurs (Z) de mesure et/ou de valeurs qui s'en déduisent à un dispositif (36) d'exploitation, éloigné dans l'espace de la pile (5) à combustible, reposant de préférence sur un nuage, pour une détermination d'une composition des gaz de la pile (5) à combustible en fonction des valeurs envoyées.

6. Utilisation du procédé suivant l'une des revendications 1 à 5, pour le contrôle d'un état d'une pile (5) à combustible au repos ou ne fonctionnant pas.

7. Utilisation du procédé suivant l'une des revendications 1 à 5, pour le contrôle et/ou la commande d'une opération de mise hors circuit d'une pile (5) à combustible.

8. Système (30) d'analyse d'une pile (5) à combustible, comprenant un dispositif (32) de mesure pour une mesure cyclovoltamétrique sur la pile (5) à combustible, **caractérisé en ce qu'**il comprend en outre un dispositif (36) d'exploitation, qui est constitué pour la détermination d'une composition des gaz dans la pile (5) à combustible en fonction de la mesure cyclovoltamétrique, **caractérisé en ce que** le dispositif (36) d'exploitation est constitué pour la détermination d'une concentration de l'hydrogène dans la pile à combustible.

9. Système (30) suivant la revendication 8, **caractérisé en ce que** le dispositif (36) d'exploitation est constitué pour produire une information, notamment un signal optique, si, pour au moins une valeur (Z) de mesure de la mesure cyclovoltamétrique et/ou au moins une valeur qui s'en déduit, un critère se rapportant une valeur de seuil est satisfait, notamment une valeur de seuil, qui représente une concentration admissible au minimum de l'hydrogène dans les espaces pour du gaz.

10. Système (30) suivant l'une des revendications 8 ou 9, **caractérisé par** un dispositif (35) de détermination d'une humidité d'un électrolyte (10) dans la pile (5) à combustible, de préférence au moyen d'une spectroscopie d'impédance, dans lequel le dispositif (32) de mesure est constitué pour régler en fonction de l'humidité, un paramètre de la mesure cyclovoltamétrique, notamment une vitesse d'avance, un potentiel minimum et/ou un potentiel maximum.

11. Installation (1) à pile à combustible comprenant au moins une pile (5) à combustible et comprenant un système (30) d'analyse de la pile (5) à combustible suivant au moins l'une des revendications 8 à 10.

FIG 1

FIG 2

# FIG 3

FIG 4

FIG 5

FIG 6

FIG 7

FIG 8

L [ As ]

FIG 9

EP 3 963 654 B1

FIG 10

## FIG 11

## FIG 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1898483 A1
- DE 102007002426 A1
- EP 0914685 B1
- EP 3151321 A1
- US 2019157693 A1